# EUROPÄISCHE PATENTSCHRIFT

(11) **EP 2 919 574 B1**
(45) Veröffentlichungstag und Bekanntmachung des Hinweises auf die Patenterteilung: **29.06.2016**
(21) Anmeldenummer: 13814125.4
(22) Anmeldetag: 19.12.2013
(51) Int. Cl.: A01C 7/20, A01C 7/04

(54) **ABSTREIFEINRICHTUNG, SÄHERZ UND EINZELKORNSÄMASCHINE**
SINGULATOR, SEED METER AND SINGLE GRAIN SEEDER
SÉPARATEUR, ÉLÉMENT DOSEUR D'UN SEMOIR ET SEMOIR MONOGRAINE

(30) Priorität: 08.01.2013 DE 102013100118
(43) Veröffentlichungstag der Anmeldung: 23.09.2015
(73) Patentinhaber: Kverneland AS, 4355 Kvernaland (NO)
(72) Erfinder: SCHEIDELER, Bernhard, 37688 Beverungen (DE)
(74) Vertreter: Schneider, Sascha
(86) Internationale Anmeldenummer: PCT/EP2013/077459
(87) Internationale Veröffentlichungsnummer: WO 2014/108296

(56) Entgegenhaltungen:
- FR-A1- 2 971 391
- US-A1- 2002 170 476

## Beschreibung

Die Erfindung betrifft ein Säherz, eine Abstreifeinrichtung und eine Einzelkornsämaschine gemäß den nebengeordneten Ansprüchen. Bekannte Säherzen für pneumatische Einzelkornsäaggregate bestehen in der Regel aus zwei Hälften, nämlich einem hinteren Teil, in welchem die Lagerung der Säscheibe und der Unterdruckbereich untergebracht sind und einem vorderen Teil, in welchen der untere Ausgang des Saatgutbehälters mündet und der selbst einen Saatgutspeicher aufweist.

Die Druckschrift FR A 29 71 391 zeigt ein Säherz für eine Einzelkornsämaschine.

In an die Größe des Saatguts angepassten Sälöchern der Säscheibe, die in bestimmten Abständen auf einem Kreisring als Sälochreihe angeordnet sind, werden einzelne Saatkörner aus dem Saatgutspeicher aufgenommen und in einem Abgabebereich durch Unterbrechung des Unterdrucks abgeworfen. Falls die Unterbrechung des Unterdrucks für den Abwurf nicht ausreicht, ist in kurzem Abstand hinter der idealen Abwurfstelle ein Zwangsabstreifer vorgesehen. Es können pro Säscheibe mehrere Sälochreihen an zueinander beabstandeten Kreisringen der Säscheibe angeordnet sein.

Um nach Möglichkeit bei jedem Abwurf nur ein Saatkorn abzuwerfen, sind Vereinzelungseinrichtungen für jede Sälochreihe vorgesehen. Diese arbeiten bei einfachem Saatgut relativ zuverlässig, stoßen aber gerade bei schwierigem Saatgut, beispielsweise Möhrensamen, an ihre Grenzen.

Aufgabe der vorliegenden Erfindung ist es daher, eine Abstreifeinrichtung und ein Säherz mit einer Abstreifeinrichtung sowie eine korrespondierende Einzelkornsämaschine vorzusehen, mit dem ein zuverlässiges vereinzeln des Saatguts, auch bei kompliziertem Saatgut, ermöglicht wird.

Diese Aufgabe wird mit einem Säherz, einer Abstreifeinrichtung sowie einer Einzelkornsämaschine gemäß dem Gegenstand der nebengeordneten Ansprüche gelöst. Vorteilhafte Weiterbildungen der Erfindung sind in den Unteransprüchen angegeben.

Grundidee der vorliegenden Erfindung ist es, eine Abstreifeinrichtung mit mindestens zwei aneinander fixierbaren, zueinander verstellbaren Abstreifelementen zum Abstreifen überschüssigen Saatguts an Sälöchern vorzusehen. Die Abstreifelemente streifen während des Betriebs des Säherzes durch Rotation der Säscheibe entlang der auf Sälochreihen angeordneten Sälöcher. Dabei sind die Abstreifelemente so anzuordnen, dass nur überschüssiges Saatgut von jedem Säloch entfernt wird, jeweils ein Saatkorn pro Säloch aber hängen bleibt. Dadurch, dass die Abstreifelemente zueinander verstellbar sind, gleichzeitig aber aneinander oder relativ zueinander fixierbar sind, ist eine optimale Einstellung beider Abstreifelemente gegenüber den Sälochreihen der Säscheibe möglich.

Unter den Begriff Saatgut im Rahmen der vorliegenden Offenbarung sind beispielsweise Dünger, Samenkörner, ob pilliert oder nackt, subsumierbar.

Gemäß einer vorteilhaften Ausführungsform der Erfindung ist vorgesehen, dass die Abstreifelemente, insbesondere ausschließlich, in Radialrichtung der Säscheiben parallel zur Säscheibe zueinander verstellbar ausgebildet sind. Hierdurch wird die Einstellung der Abstreifelemente stark vereinfacht, da die Freiheitsgrade der Verstellung der Abstreifelemente auf die Radialrichtung zur Säscheibe beschränkt sind. Die Einstellung oder Verstellung innerhalb der Radialrichtung ist entscheidend für die optimale Vereinzelung des Saatguts an den Sälöchern.

Die Funktion der Abstreifelemente wird weiter verbessert, indem diese, insbesondere gemeinsam, in orthogonaler Richtung zur Säscheibe federbeaufschlagt sind. Somit wird verhindert, dass flaches Saatgut unter die Abstreifelemente gerät oder durch Abnutzung der Abstreifelemente die Funktion der Abstreifelemente nicht mehr gewährleistet wäre. Somit ist ein langlebiger Betrieb der Abstreifelemente und damit des Säherzes mit größeren Wartungsintervallen möglich.

In Weiterbildung des erfindungsgemäßen Säherzes ist vorgesehen, dass die Abstreifelemente durch eine Umsetzung einer Rotationsbewegung einer Verstelleinrichtung in eine Translationsbewegung der Abstreifelemente in Radialrichtung zueinander verstellbar ausgebildet sind. Auf diese Weise ist die Verstellung, insbesondere durch einen Elektromotor automatisierbar.

Dabei ist es erfindungsgemäß von Vorteil, wenn für die Verstellung der Abstreifelemente, insbesondere in Radialrichtung und/oder hinsichtlich des Anpressdrucks an die Säscheibe, ein Regelkreis vorgesehen ist. Als Regelgröße dient insbesondere das Signal einer Auswertung/Erfassung der Sälöcher, vorzugsweise eine Videoüberwachung. Die Videoüberwachung wird insbesondere durch eine in das Säherz integrierte Überwachungseinrichtung durchgeführt, so dass die Überwachung der Saatgutausbringung unmittelbar an dem für die Vereinzelung zuständigen Organ, nämlich dem Säherz, durchführbar ist. Ein weiterer Aspekt der vorliegenden Erfindung ist es dabei, die Überwachung kostengünstig, schnell ansprechend und Platz sparend durch eine Zeilenkamera, insbesondere durch reine Kontrastmessung, vorzusehen. Besonders vorteilhaft an der vorliegenden Erfindung ist es, dass die Überwachung nur von einer Seite der Säscheibe erfolgen kann, nämlich insbesondere durch Reflexionsmessung. Mit anderen Worten: von einer Strahlungsquelle auf die Säscheibe gerichtete elektromagnetische Wellen werden von der Säscheibe reflektiert und nach Reflexion von der Zeilenkamera erfasst, und zwar in dem Bereich, in welchem das Saatgut auf der Säscheibe gefördert wird. Die Zeilenkamera wird entsprechend auf die Reflexionsfläche der Säscheibe fokussiert und die von der Zeilenkamera erzeugten Impulse werden durch eine Auswerteeinheit ausgewertet, wobei deutlich unterschiedliche Impulse an den Sälöchern erhalten werden, je nachdem, ob kein Säkorn, ein oder zwei Säkörner an dem Säloch anhaften. Somit kann die Belegung jedes Säloches unmittelbar nach Erfassung, also in-line, ausgewertet werden und als Stellgröße für den Regelkreis zur Verstellung der Abstreifelemente dienen.

Gemäß einer weiteren, vorteilhaften Ausführungsform der Erfindung ist vorgesehen, dass
- das erste Abstreifelement eine erste Halteplatte und einen an der ersten Haltplatte, insbesondere abnehmbar, angebrachten ersten Abstreifer aufweist und
- das zweite Abstreifelement eine zweite Halteplatte und einen an der zweiten Haltplatte, insbesondere abnehmbar, angebrachten zweiten Abstreifer aufweist.

Somit sind die Abstreifelemente optimal in einen Arbeitsraum des Säherzes platzsparend integrierbar, trotz der erweiterten Funktionalität der Abstreifelemente.

Dabei ist es besonders vorteilhaft, wenn die zweite Halteplatte die erste Halteplatte durchsetzend ausgebildet ist.

Die Abstreifelemente werden erfindungsgemäß weitergebildet, indem die zweite Halteplatte, insbesondere mit einer Außenkontur der zweiten Halteplatte an einer Innenkontur der ersten Halteplatte, entlang der ersten Halteplatte in Radialrichtung der Säscheibe gleitend geführt ist. Somit kann auf eine aufwendige Mechanik verzichtet werden, so dass die Herstellung der Abstreifeinrichtung einfach ist und ein langlebiger Betrieb gewährleistet werden kann, ohne dass eine Wartung der Abstreifeinrichtung notwendig wäre.

Indem die erste Halteplatte und/oder die zweite Halteplatte an von den Abstreifern abgewandten Rückseiten Federelemente zur Federbeaufschlagung des ersten Abstreifelements und/oder des zweiten Abstreifelements aufweisen, sind auch die oben beschriebenen Vorteile einer Federung auf einfache und platzsparende Weise in das Säherz integrierbar.

In einer weiteren, vorteilhaften Ausführungsform der Erfindung ist vorgesehen, dass die erste Halteplatte eine erste Stellgliedaufnahme zur Aufnahme eines ersten Stellglieds der Verstelleinrichtung und die zweite Halteplatte eine zweite Stellgliedaufnahme zur Aufnahme eines zweiten Stellglieds der Verstelleinrichtung aufweisen. Die Stellglieder können bevorzugt als Stifte ausgebildet sein, die in korrespondierende Ausnehmungen in den Halteplatten, insbesondere als Langloch ausgebildet, eingreifen.

Dabei ist es von besonderem Vorteil, wenn das erste Stellglied und/oder das zweite Stellglied, insbesondere separat ansteuerbar, exzentrisch rotierbar an der Verstelleinrichtung angeordnet sind. Die Verstellung erfolgt somit mit einfachen mechanischen Mitteln, die wartungsfrei und exakt steuerbar sind.

In Weiterbildung der erfindungsgemäßen Abstreifelemente ist vorgesehen, dass der erste Abstreifer eine erste Kufe aufweist und durch mindestens zwei zueinander beabstandete Stege mit der ersten Halteplatte verbunden ist und/oder der zweite Abstreifer eine zweite Kufe aufweist und durch mindestens zwei zueinander beabstandete Stege mit der Halteplatte verbunden ist. Erfindungsgemäß ist es auch denkbar, dass einer der beiden Abstreifer mit nur einem Steg verbunden ist, insbesondere der Abstreifer, der an der zweiten Halteplatte angebracht ist, soweit diese die erste Halteplatte durchsetzend ausgebildet ist.

Dabei ist es für die Funktion der Abstreifeinrichtung von besonderem Vorteil, wenn die erste Kufe und/oder die zweite Kufe, insbesondere in entgegengesetzter Richtung, gegenüber einer durch die Säscheibe definierten Ebene vorgespannt sind und/oder je eine, insbesondere in entgegengesetzter Richtung verlaufende, Krümmung aufweisen. Die durch die Krümmung oder Vorspannung erzeugte Anpressung der Abstreifer insbesondere an einer entgegen der Rotationsrichtung der Säscheibe angeordneten Vorderkante, minimiert das Problem, dass das Saatgut unter die Abstreifer gelangt und dort festklemmt und zu einem Fehlbetrieb führen kann.

Besonders vorteilhaft ist es, wenn die Krümmung entlang der Kufen einheitlich ist.

Als eigenständige Erfindung ist auch eine Abstreifeinrichtung sowie eine Einzelkornsämaschine offenbart, wobei Merkmale des Säherzes und/oder Merkmale der Abstreifeinrichtung und/oder Merkmale der Einzelkornsämaschine jeweils als auf die andere Erfindung übertragbar offenbart gelten sollen.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1a und 1b:: perspektivische Ansichten eines Einzelkornsäaggregats einer erfindungsgemäßen Einzelkornsämaschine von schräg hinten (Figur 1a) und von schräg vorne (Figur 1b),
- Fig. 2a und 2b:: perspektivische Ansichten einer Hälfte eines erfindungsgemäßen Säherzes,

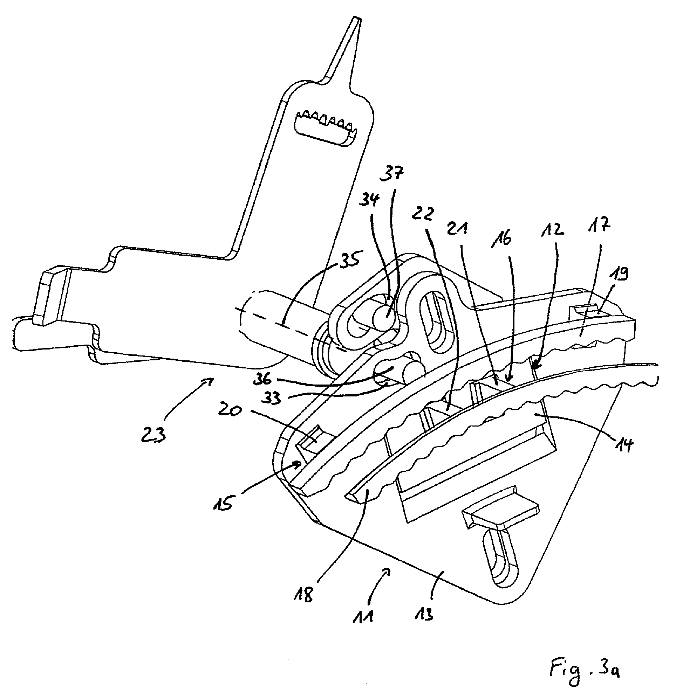

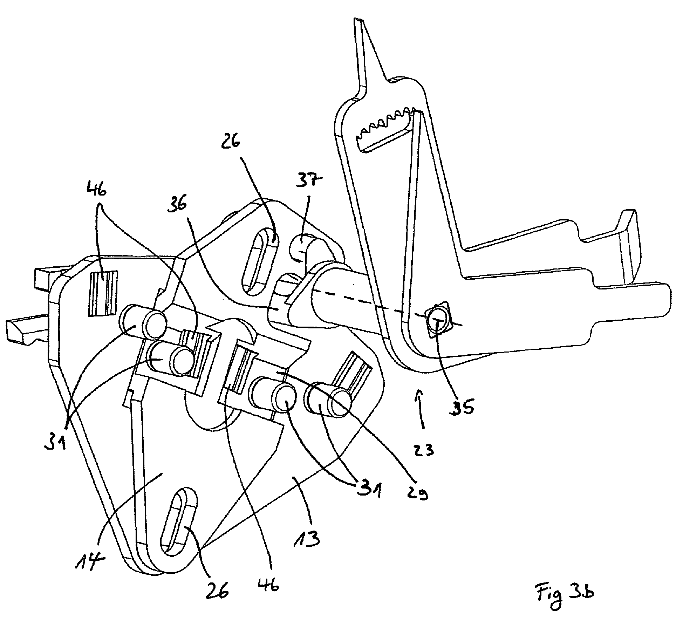

- Fig. 3a und 3b:: perspektivische Ansichten einer erfindungsgemäßen Abstreifeinrichtung von schräg vorne (Fig. 3a) und von schräg hinten (Fig. 3b),
- Fig. 4a und 4b:: perspektivische Ansichten der Abstreifeinrichtung gemäß Figuren 3a und 3b und
- Fig. 5a und 5b:: perspektivische Ansichten der erfindungsgemäßen Funktion des Abstreifelements.

In den Figuren sind gleiche Bauteile und Bauteile mit der gleichen Funktion mit den gleichen Bezugszeichen gekennzeichnet.

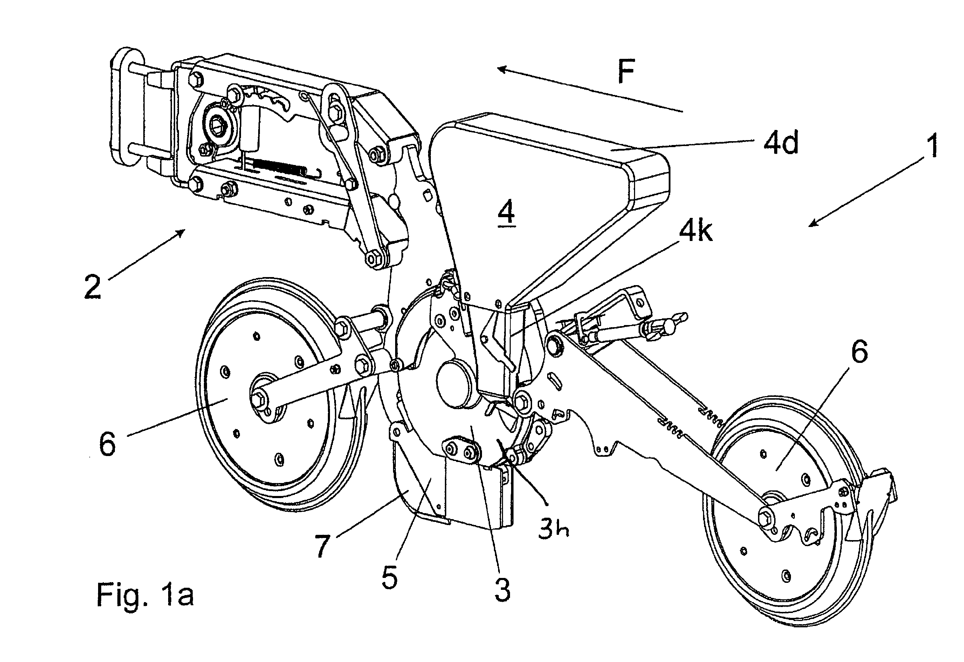

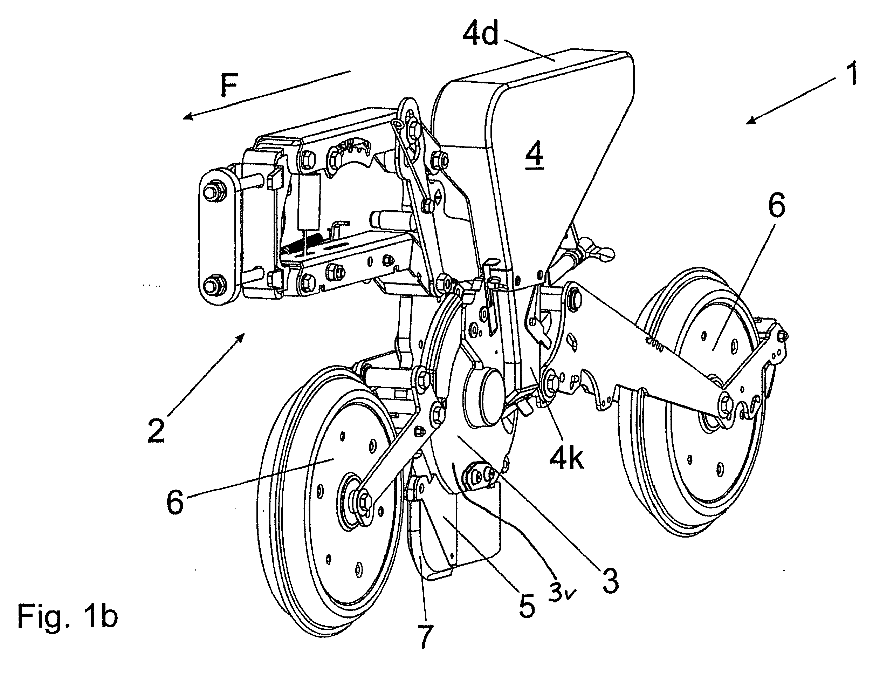

In Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung beim Betrieb der Einzelkornsämaschine in der durch den Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherz 3 angeordnete, gegenüber dem Säherz 3 schwenkbare Laufräder 6 angebracht.

Der Tank 4 ist über einen Deckel 4d verschließbar und mit Saatgut befüllbar, das wiederum über einen Kanal 4k seitlich in das Säherz 3 geführt wird.

Das Saatgut wird im Säherz 3 vereinzelt und über das Säschar 5 in eine durch eine Scharspitze 7 des Säschars 5 geöffnete Furche im Ackerboden abgelegt.

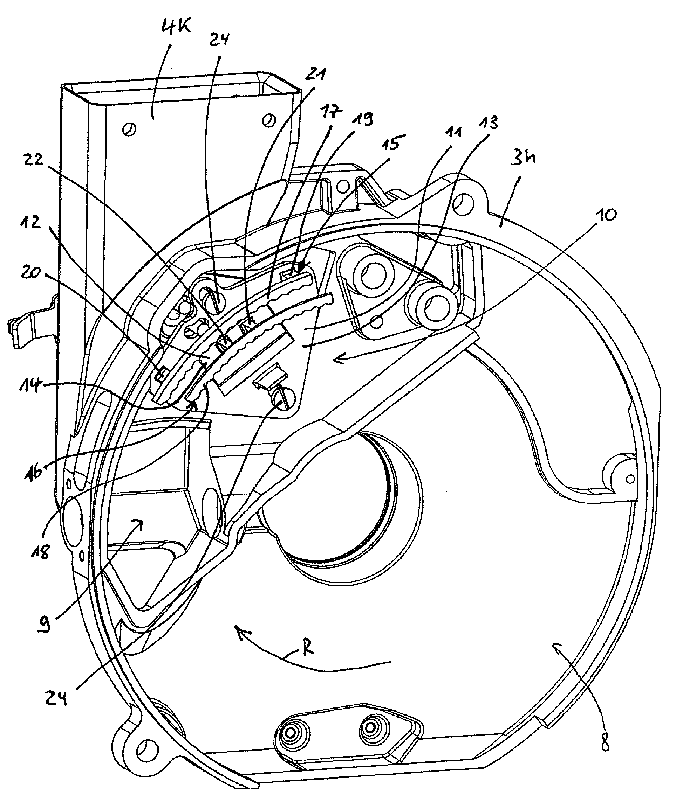

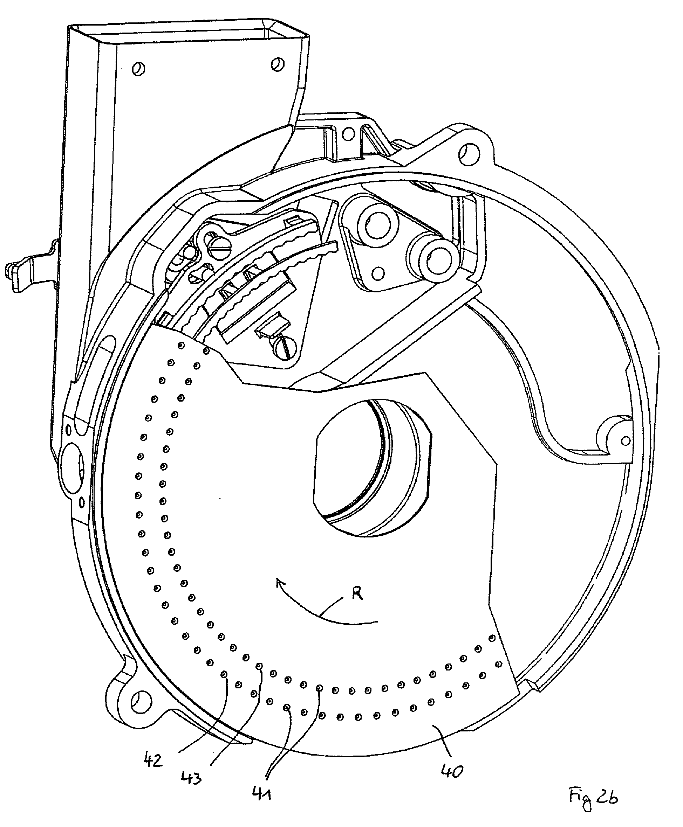

In den Figuren 2a und 2b ist das Innenleben einer in Figur 1a zu sehenden Hälfte 3h des Säherzes 3 dargestellt, während das Innenleben der korrespondierenden Hälfte 3v (siehe Figur 1b) nicht dargestellt ist. Ein durch die beiden Hälften 3h und 3v umschlossener Arbeitsraum 8 wird durch eine Säscheibe 40 in eine Druckkammer und eine Saatgutkammer unterteilt.

Die Druckkammer ist durch einen Dichtring in einen Unterdruckbereich und einen Normaldruckbereich aufgeteilt. Wesentlich ist dabei, dass im Unterdruckbereich an zur Aufnahme und Abgabe von Saatgut dienenden Sälöchern 41 der Säscheibe 40 eine Druckdifferenz anliegt, die im Normaldruckbereich aufgelöst wird, wodurch das Saatgut beim Übergang der Sälöcher 41 vom Unterdruckbereich in den Normaldruckbereich und durch Rotationsbewegung der Säscheibe 40 in einer Rotationsrichtung R der Säscheibe 40 abgeworfen wird.

Der Unterdruckbereich wird von einer nicht dargestellten Pumpe oder einem Unterdruckgebläse mit Unterdruck beaufschlagt.

Die Sälöcher 41 sind auf zwei, insbesondere parallel verlaufenden, Sälochreihen 42, 43 in je einer konzentrischen Kreisbahn der Säscheibe 40 in definierten Abständen am Umfang der Säscheibe 40 verteilt angeordnet.

Das für die vorliegende Erfindung entscheidende Bauteil, nämlich eine Abstreifeinrichtung 10, ist Rotationsrichtung R hinter einem Zulauf 9 des Kanals 4k in den Arbeitsraum 8 angeordnet. An dieser Stelle sind die Sälöcher 41 durch den an der Säscheibe 40 anliegenden Unterdruck bereits mit Saatgut bestückt. Die Abstreifeinrichtung 10 dient dazu, mehrfach mit Saatkörnern bestückte Sälöcher 41 zu vereinzeln, so dass im Idealfall an jedem Säloch 41 genau ein Saatkorn anhaftet.

Die Abstreifeinrichtung 10 weist zwei gegeneinander verschiebbare Abstreifelemente 11, 12 auf. Das erste Abstreifelement 11 besteht aus einer ersten Halteplatte 13, die durch Befestigungsmittel 24 mit zwei Freiheitsgraden an der Hälfte 3h des Säherzes 3 befestigt ist. Ein Freiheitsgrad ist in Radialrichtung der Säscheibe 40 und der zweite in Axialrichtung der Säscheibe 40, also orthogonal zur Säscheibe 40. Der Freiheitsgrad in Axialrichtung ist vorzugsweise durch Federmittel beschränkt.

In Rotationsrichtung der Säscheibe 40 weist die erste Halteplatte 13 und damit das erste Abstreifelement 11 keinen Freiheitsgrad auf. Der Freiheitsgrad in Radialrichtung ist insbesondere dadurch beschränkt, dass die Befestigungsmittel als Schrauben ausgebildet sind, entlang deren Schaft das erste Abstreifelement 11 in zu den Befestigungsmitteln 24 korrespondierenden Langlöchern 25 geführt sind. Die Langlöcher 25 sind fluchtend zueinander, insbesondere an einem oberen und unteren Ende der ersten Halteplatte 13 angeordnet.

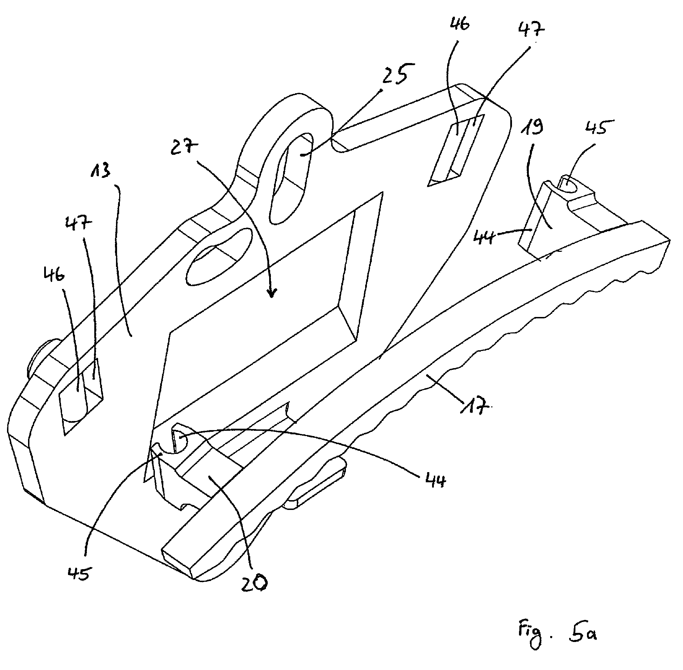

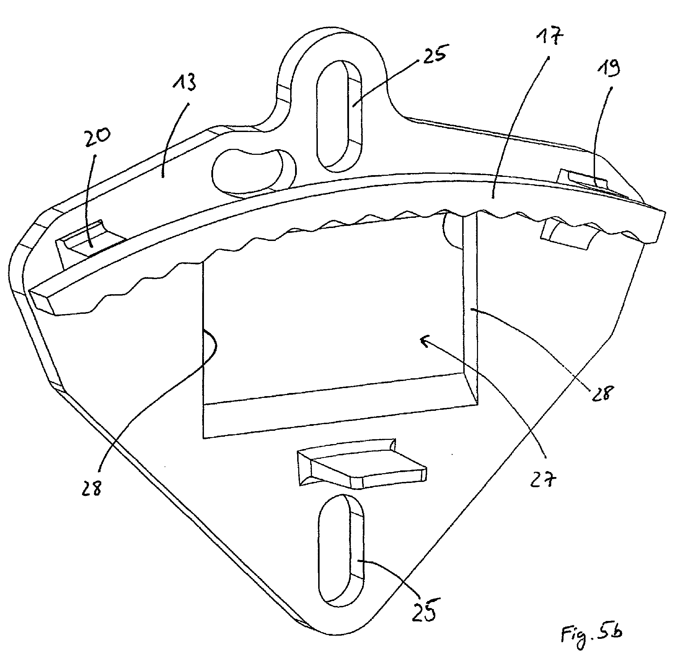

Das erste Abstreifelement 11 weist an seiner der Säscheibe 40 zugewandten Seite einen, insbesondere kufenförmigen, ersten Abstreifer 15 auf. Dieser ist vorzugsweise aus einer ersten Kufe 17 gebildet, die über zwei Stege 19, 20 an der ersten Halteplatte 13 anklipsbar ist (siehe Figur 5a und 5b).

Die Stege 19, 20 sind an den beiden, in Rotationsrichtung R gegenüberliegenden Enden der ersten Kufe 17 angeordnet, wobei die erste Kufe 17 vorzugsweise eine Vorspannung durch zur Säscheibe 40 konvexe Wölbung der ersten Kufe 17 aufweist. Die Vorspannung und Wölbung kann durch die Anordnung der, insbesondere an der Halteplatte 13 anklipsbaren, Stege 19, 20 und/oder durch entsprechende Ausformung der ersten Kufe 17 vorgesehen sein.

Das erste Abstreifelement 11 weist außerdem eine, insbesondere zwischen den Langlöchern 25 angeordnete Aufnahmeöffnung 27 zur Aufnahme, Führung und Fixierung des zweiten Abstreifelements 12 auf. Die Aufnahmeöffnung 27 ist als eine im Wesentlichen rechteckige Innenkontur mit zwei zur Radialrichtung der Säscheibe 40 parallelen, gegenüberliegenden Führungsflächen 28 ausgebildet.

Das zweite Abstreifelement 12 besteht aus einer zweiten Halteplatte 14, an welchem ein, insbesondere angeklipster, zweiter Abstreifer 16 angebracht ist. Der zweite Abstreifer 16 weist insbesondere eine zweite Kufe 18 auf, die über Stege 21, 22 an der zweiten Halteplatte 14 angebracht ist. Die zweite Kufe 18 verläuft im Wesentlichen parallel zur ersten Kufe 17. Im Gegensatz zum ersten Abstreifer 15 ist der zweite Abstreifer 16 insbesondere in einem mittleren Drittel der zweiten Kufe 18, also mit Abstand zu den beiden in Rotationsrichtung der Säscheibe 40 gegenüberliegenden Enden angeordnet. Insbesondere weist der zweite Abstreifer 16 eine, vorzugsweise in Richtung der Säscheibe 40 konvexe, Vorspannung und/oder Krümmung auf.

Das zweite Abstreifelement 12 weist zwei, insbesondere zu den Langlöchern 25 des ersten Abstreifelements 11 korrespondierende Langlöcher 26 auf, die vorzugsweise an den Befestigungsmitteln 24 zur Fixierung an der Hälfte 3h des Säherzes 3 angeordnet sind und mit diesen zusammenwirken.

Zwischen den Langlöchern 26 weist die zweite Halteplatte 14 eine zur Aufnahmeöffnung 27 korrespondierende Ausformung 29 mit parallelen Seitenwänden 30 auf. Die Seitenwände 30 wirken als Gleitflächen zur Führung des zweiten Abstreifelements 12 entlang der Führungsflächen 28 des ersten Abstreifelements 11.

Entsprechend weist auch das zweite Abstreifelement 12 zwei Freiheitsgrade analog den Freiheitsgraden des ersten Abstreifelements 11 auf.

Der erste Abstreifer 15 ist durch erste Befestigungsmittel abnehmbar an der ersten Halteplatte 13 und der zweite Abstreifer 16 ist durch zweite Befestigungsmittel abnehmbar an der zweiten Halteplatte 14 anbringbar oder angebracht, insbesondere anklipsbar oder angeklipst.

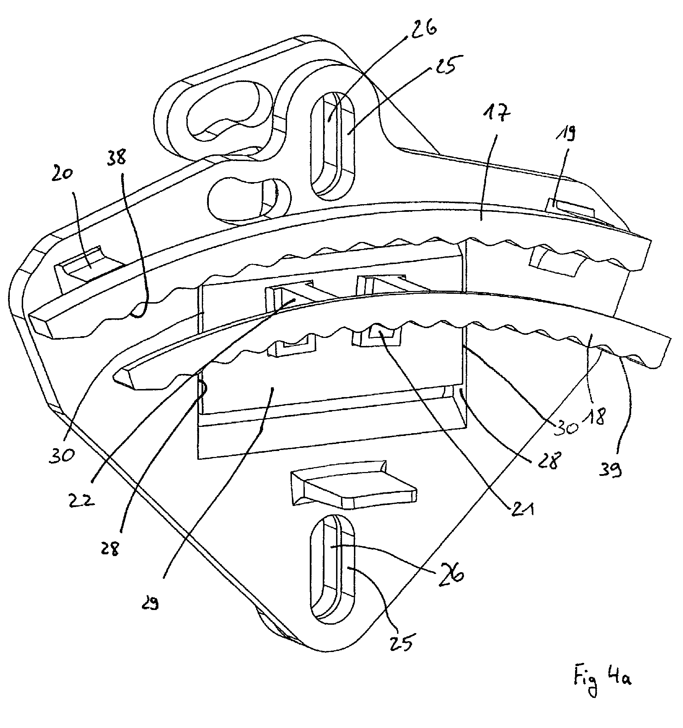

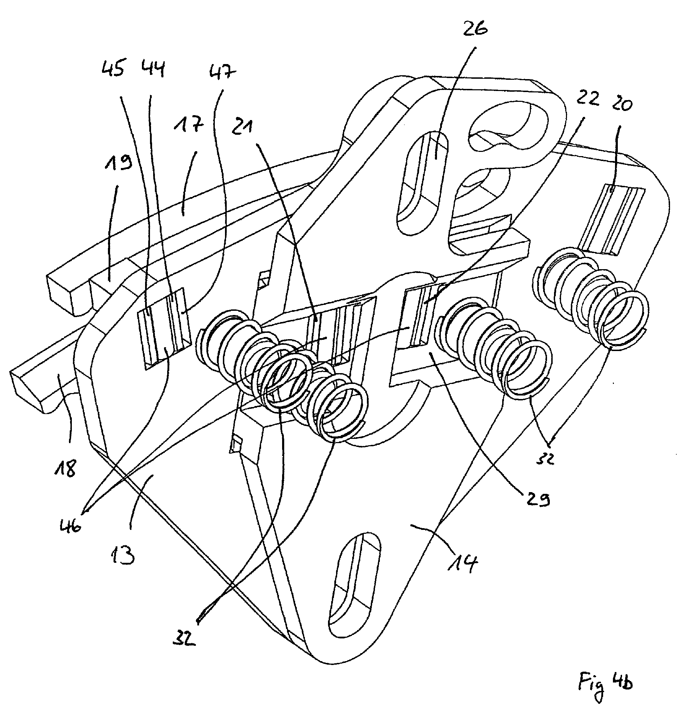

Die Befestigungsmittel bestehen jeweils abstreiferseitig aus parallel gegenüberliegenden Armen 44, 45 und jeweils halteplattenseitig aus von den Armen 44, 45 umgreifbaren, insbesondere gerundeten, vorzugsweise kreiszylinderförmigen, Fixierprofilen 46. Insbesondere weisen die Befestigungsmittel halteplattenseitig zudem jeweils eine die Fixierprofile 46 aufnehmende, die Arme 44, 45 parallel zur Halteplatte 13, 14 begrenzende Ausnehmung 47 auf. Diese dient zur Begrenzung der Freiheitsgrade der Verbindung zwischen den Abstreifern 15, 16 und den Halteplatten 13, 14 auf einen Freiheitsgrad orthogonal zur jeweiligen Halteplatte 13, 14 bzw. zur Säscheibe 40. Die Fixierprofile 46 sind insbesondere rotationssymmetrisch ausgebildet, vorzugsweise mit einer radial zur Säscheibe 40 ausgerichteten oder ausrichtbaren Roationsachse In Figur 4b ist gezeigt, dass das erste Abstreifelement 11 und das zweite Abstreifelement 12 an ihren von der Säscheibe 40 abgewandten Seiten zur Säscheibe hin federbeaufschlagt sind. Als Federmittel dienen insbesondere an der ersten Halteplatte 13 und der zweiten Halteplatte 14 orthogonal abstehende, zylinderförmige Stifte 31, auf die Spiralfedern 32 aufsetzbar sind. Die Spiralfedern 32 stützen sich im eingebauten Zustand vorzugsweise an einer Innenwand der Hälfte 3h des Säherzes 3.

Zur Verstellung des ersten Abstreifelements 11 und des zweiten Abstreifelements 12 mittels der Verstelleinrichtung 23 weist das erste Abstreifelement 11 ein, insbesondere bogenförmiges Langloch 33 auf, in das ein exzentrisch um eine Betätigungsachse 35 der Verstelleinrichtung 23 ein, insbesondere als rotierbarer Betätigungsstift 36 ausgebildetes, erstes Stellglied, eingreifend ausgebildet ist.

Ebenso weist das zweite Abstreifelement ein, insbesondere gebogenes, Langloch 34 zur Aufnahme eines um die Betätigungsachse 35 rotierenden, insbesondere als rotierbarer Betätigungsstift 37 ausgebildeten, zweiten Stellglieds der Verstelleinrichtung 23 auf.

Durch die Rotation der exzentrisch um die Betätigungsachse 35 angeordneten Betätigungsstifte 36, 37 sind die Abstreifelemente 11, 12 durch die Einschränkung deren Freiheitsgrade in Radialrichtung beweglich und somit zueinander verstellbar, soweit die Betätigungsstifte 36, 37 separat von der Verstelleinrichtung 26 ansteuerbar sind. Die Einstellung kann auch manuell erfolgen und in der gewünschten Position fixierbar sein.

Die Positionierung der Abstreifelemente 11, 12 erfolgt dabei so, dass, insbesondere wellenförmig ausgebildete, Abstreifkanten 38, 39 der Kufen 17, 18 während der Rotation der Säscheibe 40 an den Sälöchern 41 so vorbeigeführt werden, dass an den Sälöchern 41 anhaftendes Saatgut vereinzelt wird.

### Abstreifeinrichtung, Säherz und Einzelkornsämaschine

### Bezugszeichenliste

- 1: Säaggregat
- 2: Arm
- 3: Säherz
- 3v: Hälfte
- 3h: Hälfte
- 4: Tank
- 4d: Deckel
- 4k: Kanal
- 5: Säschar
- 6: Laufräder
- 7: Scharspitze
- 8: Arbeitsraum
- 9: Zulauf
- 10: Abstreifeinrichtung
- 11: Erstes Abstreifelement
- 12: Zweites Abstreifelement
- 13: erste Halteplatte
- 14: zweite Halteplatte
- 15: Erster Abstreifer
- 16: Zweiter Abstreifer
- 17: Erste Kufe
- 18: Zweite Kufe
- 19, 20: Stege
- 21, 22: Stege
- 23: Verstelleinrichtung
- 24: Befestigungsmittel
- 25: Langlöcher
- 26: Langlöcher
- 27: Aufnahmeöffnung
- 28: Führungsflächen
- 29: Ausformung
- 30: Seitenwände
- 31: Stifte
- 32: Spiralfedern
- 33: Langloch
- 34: Langloch
- 35: Betätigungsachse
- 36: Betätigungsstift
- 37: Betätigungsstift
- 38: Abstreifkante
- 39: Abstreifkante
- 40: Säscheibe
- 41: Sälöcher
- 42: Erste Sälochreihe
- 43: Zweite Sälochreihe
- 44: Arme
- 45: Arme
- 46: Fixierprofile
- 47: Ausnehmung
- R: Rotationsrichtung

## Patentansprüche

1. Säherz (3) für eine Einzelkornsämaschine mit folgenden Merkmalen:
- eine in einer Rotationsrichtung R rotierbare Säscheibe (40),
- die Säscheibe (40) weist mindestens zwei konzentrisch zur Säscheibe (40) angeordnete Sälochreihen (42, 43) mit Sälöchern (41) auf,
- ein Aufnahmebereich zur Aufnahme von Saatgut an den Sälöchern (41) und ein Abgabebereich zur Abgabe des Saatguts,
- vor dem Abgabebereich ist eine Abstreifeinrichtung (10) zur Vereinzelung des Saatguts an den Sälöchern (41) während des Betriebs des Säherzes (3) vorgesehen, die ein erstes Abstreifelement (11) für die erste Sälochreihe (42) und ein zweites Abstreifelement (12) für die zweite Sälochreihe (43) aufweist, wobei die Abstreifelemente (11, 12) gekoppelt und zueinander verstellbar ausgebildet sind,
**dadurch gekennzeichnet, dass**
- das erste Abstreifelement (11) eine erste Halteplatte (13) und einen an der ersten Halteplatte (13) angebrachten ersten Abstreifer (15) aufweist und
- das zweite Abstreifelement (12) eine zweite Halteplatte (14) und einen an der zweiten Halteplatte (14) angebrachten zweiten Abstreifer (16) aufweist,
wobei die zweite Halteplatte (14) die erste Halteplatte (13) durchsetzend ausgebildet ist.

2. Säherz nach Anspruch 1, **dadurch gekennzeichnet,**
**dass** die Abstreifelemente (11, 12), insbesondere ausschließlich, in Radialrichtung der Säscheibe (40) parallel zur Säscheibe (40) zueinander verstellbar ausgebildet sind.

3. Säherz nach einem der vorhergehenden Ansprüche, **dadurch gekennzeichnet, dass** die Abstreifelemente (11, 12), insbesondere gemeinsam, in Richtung der Säscheibe (40) federbeaufschlagt sind.

4. Säherz nach einem der vorhergehenden Ansprüche, **dadurch gekennzeichnet, dass** die Abstreifelemente (11, 12) durch eine Umsetzung einer Rotationsbewegung einer Verstelleinrichtung (23) in eine Translationsbewegung der Abstreifelemente (11, 12) in Radialrichtung zueinander verstellbar ausgebildet sind.

5. Säherz nach Anspruch 1, **dadurch gekennzeichnet, dass** die zweite Halteplatte (14), insbesondere mit einer Außenkontur der zweiten Halteplatte (14) an einer Innenkontur der ersten Halteplatte (13), entlang der ersten Halteplatte (13) in Radialrichtung der Säscheibe (40) gleitend geführt ist.

6. Säherz nach Anspruch 1, **dadurch gekennzeichnet, dass** die erste Halteplatte (13) und/oder die zweite Halteplatte (14) an von den Abstreifern (15, 16) abgewandten Rückseiten Federelemente zur Federbeaufschlagung des ersten Abstreifelements (11) und/oder des zweiten Abstreifelements (12) aufweisen.

7. Säherz nach Anspruch 1 und 4, **dadurch gekennzeichnet, dass** die erste Halteplatte (13) eine erste Stellgliedaufnahme zur Aufnahme eines ersten Stellglieds der Verstelleinrichtung (23) und die zweite Halteplatte (14) eine zweite Stellgliedaufnahme zur Aufnahme eines zweiten Stellglieds der Verstelleinrichtung aufweisen.

8. Säherz nach Anspruch 7, **dadurch gekennzeichnet, dass** das erste Stellglied und/oder das zweite Stellglied, insbesondere separat ansteuerbar, exzentrisch rotierbar an der Verstelleinrichtung angeordnet sind.

9. Säherz nach Anspruch 1, **dadurch gekennzeichnet, dass** der erste Abstreifer (15) eine erste Kufe (17) aufweist und durch mindestens zwei zueinander beabstandete Stege (19, 20) mit der ersten Halteplatte (13) verbunden ist und/oder der zweite Abstreifer (16) eine zweite Kufe (18) aufweist und durch mindestens zwei zueinander beabstandete Stege (21, 22) mit der zweiten Halteplatte (14) verbunden ist.

10. Säherz nach Anspruch 9, **dadurch gekennzeichnet, dass** die erste Kufe (1 7) und/oder die zweite Kufe (18), insbesondere in entgegengesetzter Richtung, gegenüber einer durch die Säscheibe (40) definierten Ebene vorgespannt sind und/oder je eine, insbesondere in entgegengesetzter Richtung verlaufende (konkav/konvex), Krümmung aufweisen.

11. Säherz nach Anspruch 10, **dadurch gekennzeichnet, dass** die Krümmung entlang der Kufen einheitlich ist.

12. Abstreifeinrichtung zur Vereinzelung von Saatgut an Sälöchern einer Säscheibe (40) eines Säherzes während des Betriebs des Säherzes (3) mit folgenden Merkmalen:
- ein erstes Abstreifelement (11) für eine erste Sälochreihe (42) der Säscheibe (40) und
- ein zweites Abstreifelement (12) für eine zweite Sälochreihe (43) der Säscheibe (40), wobei die Abstreifelemente (11, 12) koppelbar und zueinander verstellbar ausgebildet sind.
**dadurch gekennzeichnet, dass**
- das erste Abstreifelement (11) eine erste Halteplatte (13) und einen an der ersten Halteplatte (13) angebrachten ersten Abstreifer (15) aufweist und
- das zweite Abstreifelement (12) eine zweite Halteplatte (14) und einen an der zweiten Halteplatte (14) angebrachten zweiten Abstreifer (16) aufweist,
wobei die zweite Halteplatte (14) die erste Halteplatte (13) durchsetzend ausgebildet ist.

13. Einzelkornsämaschine mit mindestens einer Abstreifeinrichtung (10) nach Anspruch 12.

## Claims

1. Sowing heart (3) for a single-grain sowing machine with the following features:
- a sowing disk (40) that can rotate in a rotational direction R,
- the sowing disk (40) has at least two sowing hole series (42, 43), arranged concentrically to the sowing disk (40), with sowing holes (41),
- a receiving area for receiving seed at the sowing holes (41) and a dispensing area for dispensing the seed,
- in front of the dispensing area, a wiping device (10) is provided for singulating the seed at the sowing holes (41) during the operation of the sowing heart (3), which has a first wiping element (11) for the first sowing hole series (42) and a second wiping element (12) for the second sowing hole series (43), wherein the wiping elements (11, 12) are coupled and designed to be adjustable with respect to one another,
**characterized in that**
- the first wiping element (11) has a first holding plate (13) and a first wiper (15) that is attached on the first holding plate (13) and
- the second wiping element (12) has a second holding plate (14) and a second wiper (16) that is attached on the second holding plate (14),
whereby the second holding plate (14) is designed to run through the first holding plate (13).

2. Sowing heart according to Claim 1, wherein the wiping elements (11, 12) are designed to be adjustable with respect to one another, in particular exclusively, in the radial direction of the sowing disk (40) parallel to the sowing disk (40).

3. Sowing heart according to one of the preceding claims, wherein the wiping elements (11, 12) are spring-loaded, in particular together, in the direction of the sowing disk (40).

4. Sowing heart according to one of the preceding claims, wherein the wiping elements (11, 12) are designed to be adjustable with respect to one another by a conversion of a rotational motion of an adjustment device (23) into a translational motion of the wiping elements (11, 12) in the radial direction.

5. Sowing heart according to claim 1, wherein the second holding plate (14),
in particular with an outside contour of the second holding plate (14) at an inside contour of the first holding plate (13), is guided to slide along the first holding plate (13) in the radial direction of the sowing disk (40).

6. Sowing heart according to claim 1, wherein the first holding plate (13) and/or the second holding plate (14) at the reverse sides facing away from the wipers (15, 16) have spring elements for spring-loading the first wiping element (11) and/or the second wiping element (12).

7. Sowing heart according to Claim 1 and 4, wherein the first holding plate (13) has a first actuator intake for receiving a first actuator of the adjustment device (23), and the second holding plate (14) has a second actuator intake for receiving a second actuator of the adjustment device.

8. Sowing heart according to Claim 7, wherein the first actuator and/or the second actuator are arranged, in particular controlled separately, eccentrically rotatable on the adjustment device.

9. Sowing heart according to Claim 1, wherein the first wiper (15) has a first runner (17) and is connected to the first holding plate (13) by at least two arms (19,20) that are separated from one another and/or the second wiper (16) has a second runner (18) and is connected to the second holding plate (14) by at least two arms (21, 22) that are separated from one another.

10. Sowing heart according to Claim 9, wherein the first runner (17) and/or the second runner (18), in particular in the opposite direction, are prestressed relative to a plane defined by the sowing disk (40) and/or each have a, in particular running in the opposite direction (concave/convex), curvature.

11. Sowing heart according to Claim 10, wherein the curvature is uniform along the runners.

12. Wiping device for singulating seed at the sowing holes of a sowing disk (40) of a sowing heart during the operation of the sowing heart (3) with the following features:
- a first wiping element (11) for a first sowing hole series (42) of the sowing disk (40), and
- a second wiping element (12) for a second sowing hole series of the sowing disk (40), wherein the wiping elements (11, 12) can be coupled and are designed to be adjustable with respect to one another,
**characterized in that**
- the first wiping element (11) has a first holding plate (13) and a first wiper (15) that is attached on the first holding plate (13) and
- the second wiping element (12) has a second holding plate (14) and a second wiper (16) that is attached on the second holding plate (14),
wherein the second holding plate (14) is designed to run through the first holding plate (13).

13. Single-grain sowing machine with at least one wiping device (10) according to Claim 12.

## Revendications

1. Distributeur de semoir (3) pour un semoir monograin avec les caractéristiques suivantes :
- un disque d'ensemencement (40) pouvant tourner dans un sens de rotation R,
- le disque d'ensemencement (40) comporte au moins deux rangées de trous de semence (42, 43) avec des trous de semence (41) disposées de manière concentrique par rapport au disque d'ensemencement (40),
- une zone de réception pour loger les semences sur les trous de semence (41) et une zone de distribution pour distribuer les semences,
- un dispositif de raclage (10) est prévu avant la zone de distribution pour isoler les semences sur les trous de semence (41) pendant le fonctionnement du distributeur de semoir (3), lequel dispositif comporte un premier élément de raclage (11) pour la première rangée de trous de semence (42) et un deuxième élément de raclage (12) pour la deuxième rangée de trous de semence (43), les éléments de raclage (11, 12) étant couplés et constitués de manière déplaçable l'un par rapport à l'autre,
**caractérisé en ce que**
- le premier élément de raclage (11) comporte une première plaque de fixation (13) et un premier racloir (15) monté sur la première plaque de fixation (13), et
- le deuxième élément de raclage (12) comporte une deuxième plaque de fixation (14) et un deuxième racloir (16) monté sur la deuxième plaque de fixation (14),
la deuxième plaque de fixation (14) étant constituée traversant la première plaque de fixation (13).

2. Distributeur de semoir selon la revendication 1, **caractérisé en ce que** les éléments de raclage (11, 12), sont constitués en particulier exclusivement, réglables l'un par rapport l'autre dans le sens radial du disque d'ensemencement (40) parallèlement au disque d'ensemencement (40).

3. Distributeur de semoir selon l'une quelconque des revendications précédentes, **caractérisé en ce que** les éléments de raclage (11, 12) sont, en particulier en commun, sollicités par un effet de ressort dans le sens du disque d'ensemencement (40).

4. Distributeur de semoir selon l'une quelconque des revendications précédentes, **caractérisé en ce que** les éléments de raclage (11, 12) sont constitués réglables l'un par rapport à l'autre dans le sens radial par une transformation d'un mouvement de rotation d'un dispositif de raclage (23) en un mouvement de translation des éléments de raclage (11, 12).

5. Distributeur de semoir selon la revendication 1, **caractérisé en ce que** la deuxième plaque de fixation (14) est guidée de manière coulissante, le long de la première plaque de fixation (13) dans le sens radial du disque d'ensemencement (40), en particulier avec un contour extérieur de la deuxième plaque de fixation (14) sur un contour intérieur de la première plaque de fixation (13).

6. Distributeur de semoir selon la revendication 1, **caractérisé en ce que** la première plaque de fixation (13) et/ou la deuxième plaque de fixation (14) sur les côtés arrière opposés aux racloirs (15, 16) des éléments faisant ressort pour appliquer un effet de ressort du premier élément de raclage (11) et/ou du deuxième élément de raclage (12).

7. Distributeur de semoir selon la revendication 1 et 4, **caractérisé en ce que** la première plaque de fixation (13) comporte un premier logement d'organe de réglage pour loger un premier organe de réglage du dispositif de réglage (23) et la deuxième plaque de fixation (14) comporte un deuxième logement d'organe de réglage pour loger un deuxième organe de réglage du dispositif de réglage.

8. Distributeur de semoir selon la revendication 7, **caractérisé en ce que** le premier organe de réglage et/ou le deuxième organe de réglage sont disposés de manière excentrique pouvant tourner sur le dispositif de réglage, en particulier pouvant être pilotés séparément.

9. Distributeur de semoir selon la revendication 1, **caractérisé en ce que** le premier racloir (15) comporte un patin (17) et est relié par au moins deux moulures (19, 20) à distance l'une de l'autre à la première plaque de fixation (13) et/ou le deuxième racloir (16) comporte un deuxième patin (18) et est relié à la deuxième plaque de fixation (14) par au moins deux moulures (21, 22) à distance l'une de l'autre.

10. Distributeur de semoir selon la revendication 9, **caractérisé en ce que** le premier patin (17) et/ou le deuxième patin (18) sont précontraints, en particulier dans le sens opposé, par rapport à un plan défini par le disque d'ensemencement (40) et/ou comportent chacun une courbure (concave/convexe) passant en particulier dans le sens opposé.

11. Distributeur de semoir selon la revendication 10, **caractérisé en ce que** la courbure est uniforme le long des patins.

12. Racloir pour isoler les semences sur les trous d'ensemencement d'un disque d'ensemencement (40) d'un distributeur de semoir pendant le fonctionnement du distributeur de semoir (3) avec les caractéristiques suivantes :
- un premier élément de raclage (11) pour une première rangée de trous d'ensemencement (42) du disque d'ensemencement (40), et
- un deuxième élément de raclage (12) pour une deuxième rangée de trous d'ensemencement (43) du disque d'ensemencement (40), les éléments de raclage (11, 12) étant constitués pouvant être couplés et déplaçables l'un par rapport à l'autre,
**caractérisé en ce que**
- le premier élément de raclage (11) comporte une première plaque de fixation (13) et un premier racloir (15) monté sur la première plaque de fixation (13), et
- le deuxième élément de raclage (12) comporte une deuxième plaque de fixation (14) et un deuxième racloir (16) monté sur la deuxième plaque de fixation (14),
la deuxième plaque de fixation (14) étant constituée traversant la première plaque de fixation (13).

13. Semoir monograin avec au moins un racloir (10) selon la revendication 12.
